(19) Europäisches Patentamt
European Patent Office
Office européen des brevets

(11) Veröffentlichungsnummer : **0 454 747 B1**

(12) **EUROPÄISCHE PATENTSCHRIFT**

(45) Veröffentlichungstag der Patentschrift :
09.09.92 Patentblatt 92/37

(51) Int. Cl.⁵ : **F16K 27/10**

(21) Anmeldenummer : **90902237.8**

(22) Anmeldetag : **09.01.90**

(86) Internationale Anmeldenummer :
**PCT/EP90/00037**

(87) Internationale Veröffentlichungsnummer :
**WO 90/08280 26.07.90 Gazette 90/17**

(54) **ARMATURENGEHÄUSE AUS BLECH.**

(30) Priorität : **21.01.89 DE 3901698**

(43) Veröffentlichungstag der Anmeldung :
**06.11.91 Patentblatt 91/45**

(45) Bekanntmachung des Hinweises auf die
Patenterteilung :
**09.09.92 Patentblatt 92/37**

(84) Benannte Vertragsstaaten :
**AT BE CH DE DK FR GB IT LI LU SE**

(56) Entgegenhaltungen :
**DE-A- 3 113 664**
**DE-B- 1 550 613**

(56) Entgegenhaltungen :
**DE-B- 2 347 825**
**DE-C- 638 462**
**GB-A- 522 126**
**US-A- 4 484 596**
**Technische Rundschau Sulzer 2/1973**

(73) Patentinhaber : **KSB Aktiengesellschaft**
**Johann-Klein-Strasse 9**
**W-6710 Frankenthal (DE)**

(72) Erfinder : **BARTOSCHEK, Manfred**
**Friedensring 1**
**W-6710 Frankenthal (DE)**
Erfinder : **LOVISETTO, Primo**
**Via Montana, 22**
**I-36100 Vicenza (IT)**

EP 0 454 747 B1

## Beschreibung

Die Erfindung betrifft ein Armaturengehäuse gemäß dem Oberbegriff des Anspruches 1.

Ein Blechschalengehäuse für Absperrschieber ist bekannt durch die DE-B 15 50 613. Die Gehäuseschalen dieser bekannten Ausführung werden derart aufgeklappt aus Blech gepreßt, daß sie am Gehäuseboden nahtlos ineinander übergehen. Nach dem Pressen werden die Gehäuseschalen um die Längsachse des Gehäusedurchganges gegeneinander hochgebogen und an den Stoßkanten miteinander verschweißt. Mit Hilfe einer solchen Fertigungsmethode läßt sich zwar die nachteilige Schweißnaht im Gehäuseboden vermeiden; wegen des zusätzlichen Biegevorganges ist dieses Verfahren aber sehr aufwendig.

Es ist auch bereits bekannt, ein aus Halbkugelschalen zusammengesetztes Armaturengehäuse so zu gestalten, daß die die beiden Schalenteile miteinander verbindende Schweißnaht in einer die Quer- und die Längsachse der Armatur schneidenden Ebene verläuft (Technische Rundschau Sulzer 2/1973). Die Schweißnaht dieses bekannten, einem Niederdruckregelventil zugeordneten Gehäuses läuft ohne Unterbrechung und ohne Kreuzung mit einer anderen Schweißnaht rund um das gesamte Gehäuse. Über die Verbindung der Gehäuseschalen hinaus übernimmt diese Schweißnaht auch die Befestigung eines den Armaturensitz tragenden Teiles. Diese aus schweißtechnischer Sicht vorteilhafte Gehäusegestaltung fand in ähnlicher Form bei einem Kügelhahngehäuse Anwendung (DE-B 23 47 825).

Die in den vorbekannten Armaturengehäusen verwendeten Halbkugelschalen bilden nur den Gehäusemittelteil, der noch der seitlichen Ergänzung durch Rohrstutzen bedarf. Für diese Rohrstutzen, die für die Verbindung mit einer Rohrleitung mit einem Flansch ausgestattet oder als Einschweißstutzen ausgebildet sind, müssen zwei zusätzliche Schweißnähte vorgesehen werden. Weitere Schweißnähte ergeben sich, wenn ein Gehäuseaufsatz oder ein Zwischenboden zur Vervollstandigung der Armatur notwendig sein sollten.

Der Erfindung liegt die Aufgabe zugrunde, ein Armaturengehäuse aus Blech zu schaffen, das bei einer Eignung für verschiedene Arten von Absperrarmaturen und einer günstigen Strömungsführung mit einer geringen Anzahl von Schweißnähten herstellbar ist.

Die Aufgabe wird erfindungsgemäß gelöst durch ein Armaturengehäuse mit den im Anspruch 1 genannten Merkmalen. Die Unteransprüche nennen vorteilhafte Ausgestaltungen des erfindungsgemäßen Armaturengehäuses.

Anhand eines Ausführungsbeispiels wird die Erfindung näher erläutert. Die Zeichnung zeigt in

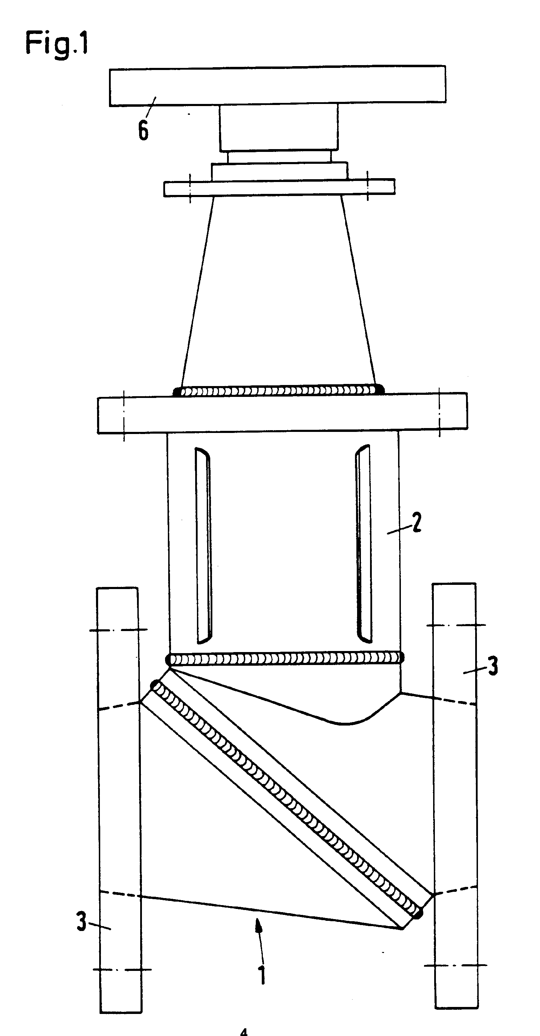

Fig. 1 die Seitenansicht eines Armaturengehäuses, in

Fig. 2 die obere Hälfte des Hauptteils des in der Fig. 1 dargestellten Armaturengehäuses in Schnittdarstellung und in

Fig. 3 die untere Hälfte des Gehäusehauptteils in Schnitt darstellung.

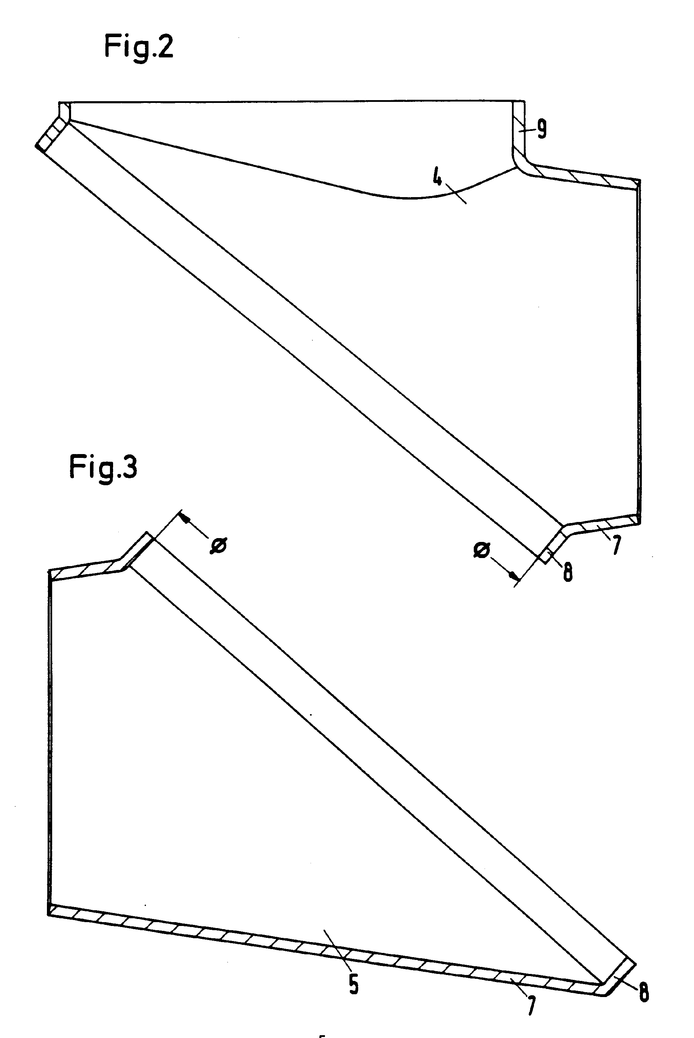

Das im wesentlichen aus einem Hauptteil (1) und einem Gehäuseaufsatz (2) bestehende Armaturengehäuse ist mit angeschweißten Flanschen (3) versehen. Der Hauptteil (1) wird gebildet durch zwei Schalenteile (4, 5). Durch eine rundum laufende Schweißnaht sind die - in den Fig. 2 und 3 gesondert dargestellten - Schalenteile (4, 5) miteinander verbunden. Ein Handrad (6) bildet den oberen Abschluß der Armatur.

Das obere Schalenteil (4) und das untere Schalenteil (5) werden im wesentlichen gebildet durch die Mantelflächen zweier am größeren Durchmesser abgeschrägter Regelstümpfe (7), die im Bereich der Abschrägung nahtlos übergehen in einen zylindrischen Bereich (8). Der Kegelstumpf bildet die einfachste Form des Schalenteils. Es sind aber auch vom Kegelstumpf abgeleitete Modifikationen möglich.

Das obere Schalenteil (4) ist noch mit einer ausgehalsten öffnung (9) zur Verbindung mit dem Gehäuseaufsatz (2) versehen. Beide Schalenteile (4, 5) sind im Bereich (8) mit einer zylindrischen Nachkalibrierung versehen. Die Nachkalibrierung könnte auch kegelig oder kugelig sein. Das erfindungsgemäße Gehäuse ist für verschiedene Armaturenarten geeignet. Es ist beispielsweise verwendbar für ein Ventil mit kegeligem, zylindrischem oder flachem Verschlußstück, für einen Schieber oder eine Rückschlagarmatur.

## Patentansprüche

1. Armaturengehäuse aus Blech, dessen Hauptteil aus zwei Schalenteilen besteht, die in einer die Quer- und die Längsachse der Armatur schneidenden Ebene unter Einschluß eines den Armaturensitz tragenden Teiles durch eine nicht unterbrochene Schweißnaht miteinander verbunden sind, **dadurch gekennzeichnet**, daß die Schalenteile (4, 5) jeweils gebildet werden aus der Mantelfläche eines am größeren Durchmesser abgeschrägten kegelstumpfartigen Körpers (7), der im Bereich der Abschrägung nahtlos übergeht in einen kurzen rotationssymmetrischen, insbesondere zylindrischen Bereich (8), dessen Mittelachse in einem Winkel zur Mittelachse des kegelstumpfartigen Körpers (7) verläuft und dessen Stirnseite der Schweißverbindung mit dem gegenüberliegenden Schalenteil (4, 5) dient.

**2.** Armaturengehäuse nach Anspruch 1, dadurch gekennzeichnet, daß das obere Schalenteil (4) mit einer zylindrisch ausgehalsten Öffnung (9) versehen ist, auf welcher ein Gehäuseaufsatz (2) mit einer nicht unterbrochenen Schweißnaht befestigt ist.

**3.** Armaturengehäuse nach Anspruch 1, dadurch gekennzeichnet, daß die Schalenteile (4, 5) im rotationssymmetrischen Bereich (8) mit einer senkrecht zu der der Schweißverbindung dienenden Stirnseite verlaufenden Nachkalibrierung versehen sind.

## Claims

**1.** Sheet metal valve housing whose main part consists of two shell portions which enclose a component carrying the valve seat and are connected to one another in a plane intersecting the transverse and longitudinal axes of the valve by an unbroken weld seam, characterized in that each of the shell portions (4,5) constitutes the periphery of a frustoconical body (7) which is bevelled at the end of larger diameter and, in the region of the bevel, seamlessly merges into a short, rotationally symmetric, particularly cylindrical, zone (8) whose central axis extends at an angle to the central axis of the frustoconical body (7) and whose end face serves for the welded connection with the opposite shell portion (4,5).

**2.** Valve housing according to claim 1, characterized in that the upper shell portion (4) is provided with an opening (9) defined by a cylindrical, outwardly directed flange, a housing mount (2) being secured over the opening (9) by an unbroken weld seam.

**3.** Valve housing according to claim 1, characterized in that the shell portions (4,5), in the rotationally symmetric zone (8), are provided with a calibrater which is normal to the end face serving for the welded connection.

## Revendications

**1.** Boîtier d'appareil de robinetterie en tôle dont l'élément principal est composé de deux pièces en forme de coque reliées entre-elles par un joint de soudure, dans un plan sécant de l'axe transversal et de l'axe longitudinal de l'appareil de robinetterie, par inclusion d'une pièce support du siège de l'appareil de robinetterie caractérisé en ce que les pièces en forme de coque (4, 5) sont formées chacune à partir de la surface d'enveloppe d'un corps (7) en tronc de cône biaisé du côté de son grand diamètre, corps qui, dans la zone du biais se prolonge sans soudure dans une zone (8) particulièrement cylindrique, courte et de rotation symétrique dont l'axe médian forme un angle avec l'axe médian du corps (7) en tronc de cône et dont la face frontale sert de liaison par soudage avec la pièce en forme de coque (4, 5) qui lui est opposée.

**2.** Boîtier d'appareil de robinetterie selon la revendication 1 caractérisé en ce que la pièce supérieure (4) en forme de coque est munie d'une ouverture (9) cylindrique à collet sur laquelle est fixée une garniture de boîtier (2) par une soudure ininterrompue.

**3.** Boîtier d'appareil de robinetterie selon la revendication 1 caractérisé en ce que les pièces (4, 5) en forme de coque sont munies dans la zone (8) de rotation symétrique d'un dispositif de recalibrage orienté perpendiculairement à la face frontale servant de liaison par soudage.

Fig.1

Fig.2

Fig.3